# EUROPÄISCHE PATENTSCHRIFT

(11) **EP 3 194 209 B1**
(45) Veröffentlichungstag und Bekanntmachung des Hinweises auf die Patenterteilung: **05.05.2021**
(21) Anmeldenummer: 15742041.5
(22) Anmeldetag: 28.07.2015
(51) Int. Cl.: B60Q 1/00, B60Q 1/26, F21S 41/141, F21S 41/151, F21S 41/33, F21S 41/663, F21S 43/14, F21S 43/31, F21S 43/40

(54) **FAHRZEUGLEUCHTE UND VERFAHREN ZUM BEREITSTELLEN EINER LICHTFUNKTION MITTELS EINER FAHRZEUGLEUCHTE**
VEHICLE LAMP AND METHOD FOR PROVIDING A LIGHT FUNCTION BY MEANS OF A VEHICLE LAMP
PROJECTEUR DE VÉHICULE ET PROCÉDÉ DE FOURNITURE D'UNE FONCTION D'ÉCLAIRAGE AU MOYEN D'UN PROJECTEUR DE VÉHICULE

(30) Priorität: 16.09.2014 DE 102014218540
(43) Veröffentlichungstag der Anmeldung: 26.07.2017
(73) Patentinhaber: Volkswagen Aktiengesellschaft, 38440 Wolfsburg (DE)
(72) Erfinder: MÜLLER, Michael, 38518 Gifhorn (DE); MENSCH, Daniel, 38442 Wolfsburg (DE); THAMM, Mathias, 39646 Oebisfelde (DE); SOLA GOMFAUS, Andreu, 08013 Barcelona (ES)
(86) Internationale Anmeldenummer: PCT/EP2015/067209
(87) Internationale Veröffentlichungsnummer: WO 2016/041675

(56) Entgegenhaltungen:
- EP-A1- 2 045 514
- EP-A1- 2 263 915
- EP-A1- 2 770 249
- EP-A2- 1 411 291
- DE-A1-102012 017 262
- DE-A1-102013 009 459
- JP-A- 2009 193 795
- US-A- 5 836 674
- US-A1- 2005 134 447
- US-A1- 2014 056 008
- US-B1- 8 398 284

## Beschreibung

Die vorliegende Erfindung betrifft eine Fahrzeugleuchte gemäß dem Oberbegriff des Anspruchs 1. Des Weiteren betrifft die Erfindung ein Verfahren zum Bereitstellen einer Lichtfunktion mittels einer Fahrzeugleuchte gemäß dem Oberbegriff des Anspruchs 12.

Aus der DE 10 2012 004 759 A1 ist eine Rückleuchtenanordnung für ein Kraftfahrzeug bekannt. Diese Rückleuchtenanordnung weist mehrere, über eine Anzeigefläche verteilt angeordnete Leuchtelemente auf. Die Leuchtelemente sind zur Bildung unterschiedlicher Leuchtmuster für verschiedene Lichtfunktionen einzeln und unabhängig voneinander ansteuerbar. Auf diese Weise können durch die Leuchtelemente die verschiedenen Lichtfunktionen einer Rückleuchte bereitgestellt werden.

Aus der DE 2010 056 312 A1 ist eine Kraftfahrzeugleuchte mit mindestens zwei Lichtquellen zum Aussenden von Licht und mindestens einem Reflektor zum Bündeln des von den Lichtquellen ausgesandten Lichts bekannt. Das ausgesandte Licht dient der Erzeugung von mindestens zwei unterschiedlichen Lichtverteilungen, wobei jede der Lichtquellen einer der Lichtverteilungen zugeordnet ist. Der Reflektor ist dabei allen Lichtquellen zugeordnet. Er weist eine facettierte Reflektorfläche auf. Einige der Facetten sind primär einer ersten Lichtquelle zugeordnet. Die anderen Facetten sind dieser Lichtquelle nur sekundär zugeordnet. Die der ersten Lichtquelle sekundär zugeordneten Facetten sind jedoch einer anderen Lichtquelle primär zugeordnet und die der ersten Lichtquelle primär zugeordneten Facetten sind der anderen Lichtquelle nur sekundär zugeordnet.

Ferner ist aus der DE 10 2012 005 826 A1 ein Optikelement für eine Fahrzeugleuchte sowie eine Fahrzeugleuchte mit einem solchen Optikelement bekannt. Das Optikelement weist eine Lichteinkoppelfläche zum Einkoppeln der Lichtemission einer Lichtquelle und eine Auskoppelstruktur auf, bei welcher die Richtungen der eingekoppelten Lichtstrahlen so verändert werden, dass eine Abstrahlcharakteristik erzeugt wird, die sich von der Abstrahlcharakteristik der Lichtemission der Lichtquelle der Fahrzeugleuchte unterscheidet. Die Auskoppelstruktur umfasst eine Vielzahl von Facettenflächen, bei denen Lichtstrahlen in einem Abstrahlwinkel ausgekoppelt werden, der von der jeweiligen Winkelausrichtung der Facettenfläche abhängt. Die Facettenflächen sind in unterschiedlichen Winkeln zueinander in einem sich nicht wiederholenden Muster angeordnet. Durch die Gestaltung der Facettenflächen der Auskoppelstruktur wird mittels des Optikelements ein Glitzereffekt erzeugt, bei dem der Betrachter bei variierenden Betrachtungspositionen und Betrachtungswinkeln keine gleichmäßig leuchtende Fläche wahrnimmt

US2014/0056008 A1 beschreibt einen facettierten Reflektor für eine Rückleuchte. Durch diesen Reflektor wird das von einer Lichtquelle emittierte divergierende Lichtbündel so in verschiedene Richtungen umgelenkt, dass ein Glitzereffekt erzeugt wird.

Fahrzeugleuchten tragen in zunehmendem Maße zum Design des Fahrzeugs bei. Durch die Gestaltung der Fahrzeugleuchte soll dem Fahrzeug insbesondere ein charakteristisches Erscheinungsbild verliehen werden, welches leicht wiedererkannt wird und durch welches sich das Fahrzeug von dem Design anderer Fahrzeuge unterscheidet. Ferner machen es die Fahrverhältnisse für die Fahrzeugleuchten des Fahrzeugs, insbesondere für die Heckleuchten und Scheinwerfer, erforderlich, dass der Aufbau der Leuchten sehr kompakt ist und wenig Platz für die lichttechnischen Einrichtungen zum Erzeugen der Abstrahlcharakteristik der Lichtfunktionen vorhanden ist.

Der vorliegenden Erfindung liegt daher die Aufgabe zugrunde, eine Fahrzeugleuchte und ein Verfahren zum Bereitstellen einer Lichtfunktion mittels einer Fahrzeugleuchte bereitzustellen, welche der Fahrzeugleuchte ein besonders charakteristisches Erscheinungsbild verleihen.

Erfindungsgemäß wird diese Aufgabe durch eine Fahrzeugleuchte mit den Merkmalen des Anspruchs 1 und ein Verfahren mit den Merkmalen des Anspruchs 12 gelöst. Vorteilhafte Ausgestaltungen und Weiterbildungen ergeben sich aus den abhängigen Ansprüchen.

Die erfindungsgemäße Fahrzeugleuchte ist dadurch gekennzeichnet, dass die Lichtquellen so ansteuerbar sind, dass sich bei der Betrachtungsposition ein Funkeleffekt ergibt, bei dem nacheinander eine oder mehrere Facettenflächen bei verschiedenen Positionen aufgrund von reflektierten Lichtstrahlen aufblitzen, wobei die Lichtquellen nacheinander oder in einer beliebigen Reihenfolge Licht emittieren.

Bei der erfindungsgemäßen Fahrzeugleuchte ist somit von einer bestimmten, von der Fahrzeugleuchte entfernten Betrachtungsposition aus zumindest ein von einer ersten Lichtquelle emittierter Lichtstrahl, dessen Richtung von einer ersten Facettenfläche bei einer ersten Facettenposition verändert wurde, sichtbar, ein von einer zweiten Lichtquelle emittierter Lichtstrahl, dessen Richtung von einer zweiten Facettenfläche bei einer zweiten Facettenposition verändert wurde, sichtbar und ein von einer dritten Lichtquelle emittierter Lichtstrahl, dessen Richtung von einer dritten Facettenfläche bei einer dritten Facettenposition verändert wurde, sichtbar. Dabei sind die erste, zweite und dritte Facettenposition jeweils beabstandet voneinander angeordnet.

Bei der erfindungsgemäßen Fahrzeugleuchte sind die Facettenflächen somit so angeordnet bzw. ausgerichtet, dass Lichtstrahlen von verschiedenen Lichtquellen über Facettenflächen bei verschiedenen Positionen zu einer bestimmten Betrachtungsposition gelangen können. Diese Geometrie der Facettenflächen relativ zu der Anordnung der Lichtquellen ermöglicht es, Lichtstrahlen von verschiedenen Positionen zu einer bestimmten Betrachtungsposition gelangen zu lassen. Wenn die Lichtquellen nun so angesteuert werden, dass sie nacheinander oder in einer beliebigen Reihenfolge Licht emittieren, ergibt sich ein Funkeleffekt bei der ersten Betrachtungsposition, bei dem nacheinander eine oder mehrere Facettenflächen bei verschiedenen Positionen aufgrund von reflektierten Lichtstrahlen aufblitzen. Ein Betrachter bei dieser Betrachtungsposition nimmt nämlich nacheinander Lichtstrahlen von den verschiedenen Facettenpositionen wahr. Dieser Funkeleffet ergibt sich dabei ohne dass sich die relative Position des Betrachters zu der Fahrzeugleuchte verändern muss.

Gemäß einer weiteren Ausgestaltung der erfindungsgemäßen Fahrzeugleuchte umfasst das Optikelement mehrere beabstandet voneinander angeordnete Facettenflächen für die gilt, dass von einer bestimmten, von der Fahrzeugleuchte entfernten Betrachtungsposition aus ein von der ersten Lichtquelle emittierter und in seiner Richtung von diesen Facettenflächen veränderter Lichtstrahl sichtbar ist. Das bedeutet, dass ein von der ersten Lichtquelle emittierter Lichtstrahl, dessen Richtung von diesen Facettenflächen verändert wurde, sichtbar ist. Gleichermaßen gibt es mehrere beabstandete Facettenflächen für die gilt, dass von dieser Betrachtungsposition aus ein von der zweiten Lichtquelle emittierter und in seiner Richtung von diesen Facettenflächen veränderter Lichtstrahl sichtbar ist. Des Weiteren gibt es mehrere beabstandete Facettenflächen für die gilt, dass von der Betrachtungsposition aus ein von der dritten Lichtquelle emittierter und in seiner Richtung von diesen Facettenflächen veränderter Lichtstrahl sichtbar ist. Wenn somit beispielsweise die erste Lichtquelle Licht emittiert, sind von der Betrachtungsposition aus Lichtstrahlen von mehreren Facettenflächen gleichzeitig sichtbar. Die Facettenflächen sind jedoch beabstandet voneinander angeordnet. Wenn die zweite Lichtquelle eingeschaltet ist, sind von der Betrachtungsposition aus Lichtstrahlen von mehreren anderen Facettenflächen sichtbar und wenn die dritte Lichtquelle eingeschaltet ist, sind von der Betrachtungsposition aus wiederum mehrere von noch anderen Facettenflächen ausgehende Lichtstrahlen sichtbar. Hierdurch wird der Funkeleffekt noch verstärkt, da ein Betrachter bei dieser Betrachtungsposition Lichtstrahlen gleichzeitig von verschiedenen beabstandeten Facettenpositionen und nacheinander von wiederum anderen beabstandeten Facettenpositionen wahrnimmt.

Gemäß einer Weiterbildung der erfindungsgemäßen Fahrzeugleuchte sind die Positionen und/oder Ausrichtungen der Facettenflächen relativ zu den Positionen der Lichtquellen so angeordnet, dass von der Betrachtungsposition aus ein von der ersten Lichtquelle emittierter und in seiner Richtung von einer zu der ersten Facettenfläche direkt benachbarten Facettenfläche veränderter Lichtstrahl nicht sichtbar ist, ein von der zweiten Lichtquelle emittierter und in seiner Richtung von einer zu der zweiten Facettenfläche direkt benachbarten Facettenfläche veränderter Lichtstrahl nicht sichtbar ist und auch ein von der dritten Lichtquelle emittierter und in seiner Richtung von einer zu der dritten Facettenfläche direkt benachbarten Facettenfläche veränderter Lichtstrahl nicht sichtbar ist. Es ist somit von der Betrachtungsposition aus ein von der ersten Lichtquelle emittierter Lichtstrahl, dessen Richtung von einer zu der ersten Facettenfläche direkt benachbarten Facettenfläche verändert wurde, nicht sichtbar ist, ein von der zweiten Lichtquelle emittierter Lichtstrahl, dessen Lichtquelle von einer zu der zweiten Facettenfläche direkt benachbarten Facettenfläche verändert wurde, nicht sichtbar ist und auch ein von der dritten Lichtquelle emittierter Lichtstrahl, dessen Richtung von einer zu der dritten Facettenfläche direkt benachbarten Facettenfläche verändert wurde, nicht sichtbar ist. Wenn somit eine der Lichtquellen leuchtet, gelangt zu der Betrachtungsposition ein von der ersten Facettenfläche ausgehender Lichtstrahl zu dieser Betrachtungsposition, jedoch gelangt ein von benachbarten Facettenflächen ausgehender Lichtstrahl nicht zu dieser Betrachtungsposition. Es wird somit gerade keine homogen leuchtende Fläche bei der Betrachtungsposition durch die Lichtemission einer bestimmten Lichtquelle der Fahrzeugleuchte erzeugt. Hierdurch wird vorteilhafterweise der Funkeleffekt verstärkt.

Des Weiteren können die Positionen und/oder Ausrichtungen der Facettenflächen relativ zu den Positionen der Lichtquellen so angeordnet sein, dass von einer bestimmten, von der Fahrzeugleuchte entfernten zweiten Betrachtungsposition aus, die beabstandet von der vorgenannten Betrachtungsposition ist, zumindest ein von der ersten Lichtquelle emittierter und in seiner Richtung von einer vierten Facettenfläche bei einer vierten Facettenposition veränderter Lichtstrahl sichtbar ist, ein von der zweiten Lichtquelle emittierter und in seiner Richtung von einer fünften Facettenfläche bei einer fünften Facettenposition veränderter Lichtstrahl sichtbar ist, und ein von der dritten Lichtquelle emittierter und in seiner Richtung von einer sechsten Facettenfläche bei einer sechsten Facettenposition veränderter Lichtstrahl sichtbar ist, wobei die erste, zweite, dritte, vierte, fünfte und sechste Facettenposition jeweils beabstandet voneinander angeordnet sind. Die Facettenflächen sind somit so angeordnet und ausgerichtet, dass vorteilhafterweise gleichzeitig bei verschiedenen Betrachtungspositionen ein Funkeleffekt erzeugt werden kann, wenn die Lichtquellen in einer bestimmten Sequenz angesteuert werden, um Licht zu emittieren oder verändert zu emittieren. Vorteilhafterweise kann dieser Funkeleffekt für alle Betrachtungspositionen innerhalb eines bestimmten Raumwinkels von der Fahrzeugleuchte erzeugt werden.

Unter Facettenflächen werden im Sinne der vorliegenden Schrift insbesondere benachbarte Flächen des Optikelements verstanden, welche die Richtung einfallender Lichtstrahlen unterschiedlich verändern. Dabei ist die Veränderung beim Übergang von einer Facettenfläche zu einer anderen Facettenfläche, insbesondere zu einer benachbarten Facettenfläche, unstetig. Die Richtung eines Lichtstrahls wird von benachbarten Facettenflächen somit vollkommen unterschiedlich verändert. Auf einer einzigen Facettenfläche kann es auch zu unterschiedlichen Veränderungen der Richtung eines einfallenden Lichtstrahls kommen. Diese Veränderung ist dann jedoch stetig.

Gemäß einer Ausgestaltung der erfindungsgemäßen Fahrzeugleuchte sind die Facettenflächen reflektierend. Vorteilhafterweise kann hierdurch ein sehr kompakter Aufbau der erfindungsgemäßen Fahrzeugleuchte erzielt werden. Die Facettenflächen sind insbesondere spiegelnd, sodass eine gerichtete Reflektion auftritt, bei welcher der Ausfallswinkel eines reflektierten Lichtstrahls gleich dem Einfallswinkel des einfallenden Lichtstrahls ist. Vorteilhafterweise wird hierdurch erreicht, dass ein Lichtstrahl, welcher von einer bestimmten Lichtquelle emittiert wurde, sehr genau zu einer bestimmten Betrachtungsposition umgelenkt wird.

Bei dem Optikelement handelt es sich insbesondere um einen zusammenhängenden Reflektor mit einer Reflektorfläche. Auf der Reflektorfläche sind die reflektierenden Facettenflächen angeordnet. Diese Ausgestaltung hat den Vorteil, dass das Optikelement kostengünstig hergestellt werden kann und außerdem einen geringen Bauraumbedarf hat. Schließlich wird hierdurch vorteilhafterweise erreicht, dass die Facettenflächen sehr einfach mittels des Optikelements montierbar sind.

Gemäß einer Weiterbildung der erfindungsgemäßen Fahrzeugleuchte umfasst ein Querschnitt des Reflektors eine von der Reflektorfläche gebildete parabolische Linie. Die Reflektorfläche ist in diesem Fall durch ein Verschieben der parabolischen Linie auf einer Geraden gebildet. In einer Richtung ist der Querschnitt des Reflektors somit bei allen Positionen gleich der parabolischen Linie. Unter einer parabolischen Linie wird eine Linie verstanden, die auf einer Parabel liegt. Zwar liegen die reflektierenden Facettenflächen nicht auf der parabolischen Linie. Wenn jedoch über einen Abschnitt des Reflektors eine Mittelung durchgeführt wird, welche den unstetigen Verlauf der benachbarten Facettenflächen glättet, ergibt sich die Reflektorfläche des Reflektors, welche im Querschnitt auf einer parabolischen Linie liegt. Vorteilhaft an dieser rinnenartigen Ausgestaltung der Reflektorfläche ist, dass ein sehr charakteristisches Erscheinungsbild der Fahrzeugleuchte mit einer speziellen Signatur erreicht wird.

Gemäß einer Weiterbildung der erfindungsgemäßen Fahrzeugleuchte sind die Lichtquellen in der Brennlinie der Reflektorfläche angeordnet. Jeder Querschnitt des Reflektors, bei dem eine von der Reflektorfläche parabolische Linie entsteht, besitzt einen Brennpunkt. Wenn nun benachbarte parallele Querschnitte betrachtet werden, ergibt sich eine Brennlinie der Reflektorfläche. Durch diese Anordnung der Lichtquellen wird vorteilhafterweise erreicht, dass sehr einfach nahezu parallele Lichtstrahlen durch die Facettenflächen erzeugt werden können. Außerdem vereinfacht diese Anordnung der Lichtquellen die Ausrichtung der Facettenflächen relativ zu den Lichtquellen, um eine gewünschte Abstrahlcharakteristik der Fahrzeugleuchte zu erzeugen.

Die Reflektorfläche, auf welcher die Facettenflächen angeordnet sind, kann auch eine andere geometrische Form aufweisen. Sie kann beispielsweise konkav gewölbt sein. In diesem Fall können die Lichtquellen auch auf andere Weise relativ zu der Reflektorfläche angeordnet sein. Sie können beispielsweise auf einer gekrümmten Linie angeordnet sein, beispielsweise auf einer parabolischen oder kreisförmigen Linie. Auch in diesem Fall sind die Positionen und die Ausrichtungen der Facettenflächen relativ zu den Positionen der Lichtquellen so angeordnet, dass die vorstehend genannten Bedingungen erfüllt sind, um einen Funkeleffekt zu erzeugen, wenn die Lichtemissionen der Lichtquellen aufeinanderfolgend verändert werden.

Bei den Lichtquellen handelt es sich insbesondere um lichtemittierende Dioden (Leuchtdioden). Lichtemittierende Dioden haben den Vorteil, dass sie eine sehr lange Lebensdauer aufweisen und außerdem sehr punktförmige Lichtquellen darstellen. Die erfindungsgemäße Fahrzeugleuchte besitzt insbesondere mehr als drei lichtemittierende Dioden. Die Anzahl der lichtemittierenden Dioden bzw. der Lichtquellen liegt insbesondere in einem Bereich von 5 bis 100 Lichtquellen, bevorzugt in einem Bereich von 10 bis 20 Lichtquellen. Hierdurch wird der Funkeleffekt vorteilhafterweise verstärkt. Die Lichtquellen können separat voneinander angeordnet sein. Sie können jedoch auch in einer Gesamtlichtquelle integriert sein, bei der jedoch die Lichtemissionen von verschiedenen, ggf. sehr nah beieinanderliegenden Positionen erfolgen. Bei der Gesamtlichtquelle kann es sich beispielsweise um einen Halbleiterchip mit mehreren lichtemittierenden Dioden handeln.

Unter einer Lichtquelle kann im Sinne der Erfindung jedoch auch eine Fläche verstanden werden, welche Licht emittiert. Die elektromagnetische Strahlung hierfür kann in diesem Fall z. B. auch an einem anderen Ort erzeugt und zu der Fläche geleitet oder gestrahlt werden. Bei der Fläche wird die elektromagnetische Strahlung dann ggf. in ihrer Richtung und/oder Wellenlänge verändert. Unabhängig von dem Ort der Erzeugung des Lichts bzw. der elektromagnetischen Strahlung ist dann die Position der Fläche, von welcher der Lichtstrahl zu der Facettenfläche gelangt, die Position der Lichtquelle im Sinne der Erfindung. Die Eigenschaft dieser Fläche kann sich dabei auch zeitlich verändern, so dass zu verschiedenen Zeiten Lichtstrahlen zu verschiedenen Facettenflächen gestrahlt werden. Die Fläche kann z. B. von einem optischen Element umfasst sein, das eine reflektierende und/oder brechende Fläche aufweist. Dieses mittels optische Element kann auch einer Steuervorrichtung bewegbar sein.

Gemäß einer Ausgestaltung der erfindungsgemäßen Fahrzeugleuchte sind die Facettenflächen von ebenen Flächen gebildet. Vorteilhafterweise lassen sich solche Facettenflächen kostengünstig herstellen. Die Normalen benachbarter Facettenflächen sind dabei insbesondere unterschiedlich ausgerichtet. Hierdurch wird auf einfache und kostengünstige Weise die unstetige Veränderung der Richtung der einfallenden Lichtstrahlen und damit der vorstehende Funkeleffekt erreicht.

Die Facettenflächen sind insbesondere über Kanten miteinander verbunden, wobei der Krümmungsradius der Kanten der Facetten möglichst klein ist. Radien auf der Facettenfläche sollten vermieden werden, um die brillante Anmutung des Reflektors zu beeinträchtigen. Gleichermaßen sollte der Radius bei einer Kante, die von benachbarten Facettenflächen gebildet ist, so klein wie möglich sein. Auch durch diese Ausgestaltung wird der Funkeleffekt verstärkt.

Die Facettenflächen sind insbesondere von einer Kombination aus rechteckigen und/oder dreieckigen Flächen gebildet. Es können somit sowohl rechteckige als auch dreieckige Flächen sowie nur rechteckige oder nur dreieckige Flächen umfasst sein, die ggf. unterschiedliche Größen aufweisen. Die Wahl der Geometrie der Facettenflächen richtet sich nach der Geometrie der Reflektorfläche, auf welcher die Facettenflächen gebildet sind. Es sollte hier eine möglichst effiziente Reflektion erzielt werden, wobei Beschränkungen durch das Herstellungsverfahren der Facettenflächen und Beschränkungen, die sich durch die Größe der Facettenflächen ergeben, zu berücksichtigen sind. Diese Gestaltung der Facettenflächen ermöglicht es somit, die Geometrie des Reflektors sehr flexibel zu gestalten und eine effiziente Reflexion zu erzielen.

Die Facettenflächen können auf der Reflektorfläche beispielsweise dadurch gebildet werden, dass sie mittels eines sehr kleinen Fräsers gefräst werden. Beispielsweise kann die Reflektorfläche mit den Facettenflächen aus einem Aluminiumblock herausgefräst werden. Dieser wird insbesondere nicht bedampft, um die Brillanz des Reflektors zu erhalten. Alternativ kann der Reflektor mittels Galvanotechnik hergestellt werden. In diesem Fall ist ein Bedampfen der resultierenden Facettenflächen erforderlich.

Gemäß einer weiteren Ausgestaltung der erfindungsgemäßen Fahrzeugleuchte sind die Facettenflächen lichtbrechende Elemente, durch welche das von den Lichtquellen emittierte Licht durchtritt. In diesem Fall können die Facettenflächen z.B. auf einer Auskoppelstruktur eines transparenten Optikelements gebildet sein, welches einen bestimmten Brechungsindex aufweist. Beim Austritt der Lichtstrahlen aus dem Optikelement werden die Lichtstrahlen dann durch Brechung in ihrer Richtung verändert. Diese Ausgestaltung der erfindungsgemäßen Fahrzeugleuchte ermöglicht es vorteilhafterweise, die Umwandlung von elektrischer Energie in Lichtstrahlen an einen Ort zu verlegen, welcher von dem Optikelement entfernt ist.

Gemäß einer Weiterbildung der erfindungsgemäßen Fahrzeugleuchte umfasst die Steuereinheit einen Zufallsgenerator. Mit diesem Zufallsgenerator ist bzw. sind aufeinanderfolgend eine oder mehrere Lichtquelle(n) zufällig auswählbar, deren Lichtemission für ein kurzes Zeitintervall veränderbar ist. Die Lichtemission der ausgewählten Lichtquelle(n) kann insbesondere kurzzeitig erhöht werden. Durch den Zufallsgenerator kann vorteilhafterweise erreicht werden, dass das bei der Fahrzeugleuchte wahrnehmbare Funkeln natürlichen Funkelphänomenen angenähert wird.

Gemäß einer anderen Ausgestaltung der erfindungsgemäßen Fahrzeugleuchte umfasst die Steuereinheit einen Speicher, in dem ein Muster gespeichert ist, welches eine aufeinanderfolgende Auswahl von Lichtquellen bestimmt, deren Lichtemission für ein kurzes Zeitintervall veränderbar ist. Auch in diesem Fall wird die Lichtemission der ausgewählten Lichtquelle(n) insbesondere kurzzeitig erhöht. Durch das im Voraus gespeicherte Muster für die Ansteuerung der Lichtquellen kann vorteilhafterweise die Charakteristik des Funkeleffekt im Voraus exakt festgelegt werden.

Durch den Zufallsgenerator oder durch das in dem Speicher gespeicherte Muster sind die Lichtquellen insbesondere so ansteuerbar, dass bei einer Betrachtungsposition ein Funkeleffekt erzeugt wird, bei dem nacheinander eine oder mehrere Facettenflächen bei verschiedenen Positionen aufgrund von reflektierten Lichtstrahlen aufblitzen.

Gemäß einer weiteren Ausgestaltung der erfindungsgemäßen Fahrzeugleuchte ist in Richtung der von dem Optikelement ausgehenden Lichtstrahlen eine Lichtscheibe mit weiteren optisch wirksamen Elementen angeordnet. Bei der Lichtscheibe handelt es sich insbesondere um eine Außenlichtscheibe, welche ein Gehäuse der Fahrzeugleuchte in Lichtemissionsrichtung abschließt. Des Weiteren kann es sich bei der Lichtscheibe um eine Zwischenlichtscheibe handeln, welche zwischen dem Optikelement und einer Außenlichtscheibe angeordnet ist. Durch diese weiteren optisch wirksamen Elemente wird vorteilhafterweise der Funkeleffekt verändert. Die optisch wirksamen Elemente sind insbesondere so angeordnet, dass von der Betrachtungsposition aus teilweise Lichtstrahlen wahrgenommen werden, welche bei den Facettenflächen reflektiert worden sind und teilweise Lichtstrahlen wahrgenommen werden, deren Richtung nochmals von den weiteren optisch wirksamen Elementen verändert wurde. Auf diese Weise kann der Funkeleffekt gleichzeitig in zwei Tiefenebenen wahrgenommen werden. Zum einen ergibt sich der Funkeleffekt bei den Facettenflächen in einer in Betrachtungsrichtung hinteren Ebene. Zum anderen ergibt sich ein Funkeleffekt in einer vorderen Ebene bei den weiteren optisch wirksamen Elementen bei der Lichtscheibe. Gegebenenfalls sind hier die weiteren optisch wirksamen Elemente nur bei Teilbereichen der Lichtscheibe angeordnet. Gemäß einer anderen Ausgestaltung werden alle an den Facettenflächen reflektierten Lichtstrahlen nochmals von den weiteren optisch wirksamen Elementen in ihrer Richtung verändert, sodass der Funkeleffekt vom Hintergrund innerhalb der Fahrzeugleuchte in den Vordergrund bei der Lichtscheibe verschoben wird.

Gemäß einer weiteren Ausgestaltung sind die optisch wirksamen Elemente ferner so ausgebildet, dass von außen auftreffendes Licht zumindest teilweise zurückreflektiert wird. Diese sogenannten Rückstrahloptiken der weiteren optisch wirksamen Elemente können auch nur bei einem Teil der Lichtscheibe angeordnet sein. Auf diese Weise können weitere optische Effekte durch Reflektion des von außen auftreffenden Lichts erzeugt werden, welche der Fahrzeugleuchte vorteilhafterweise ein noch charakteristischeres Erscheinungsbild verleiht. Durch die Rückstrahloptiken kann ein Glitzereffekt erzielt werden. Bei dem Glitzereffekt nimmt der Betrachter Lichtreflektionen bei variierenden Betrachtungspositionen und Betrachtungswinkeln wahr, die von unterschiedlichen Positionen der Rückstrahloptiken reflektiert werden. Dabei ist bei einer stetigen Veränderung der Betrachtungsposition die Veränderung der Position der bei der jeweiligen Betrachtungsposition sichtbaren Lichtreflektion unstetig. Im Unterschied zum Funkeleffekt verändert sich beim Glitzereffekt die Lichtreflektion jedoch nicht, wenn die Betrachtungsposition gleich bleibt.

Die Erfindung betrifft ferner ein Verfahren zum Bereitstellen einer Lichtfunktion mittels einer Fahrzeugleuchte. Dabei weist die Fahrzeugleuchte zumindest drei bei verschiedenen Positionen angeordnete Lichtquellen und ein Optikelement auf, das eine Vielzahl von Facettenflächen umfasst, wobei die Richtungen von Lichtstrahlen, die von den Lichtquellen emittiert wurden und die auf die Facettenflächen treffen, durch die Facettenflächen verändert werden. Bei der Fahrzeugleuchte handelt es sich insbesondere um die vorstehend beschriebene Fahrzeugleuchte.

Bei dem erfindungsgemäßen Verfahren wird eine Sequenz von Lichtquellen ausgewählt, deren Lichtemission aufeinander folgend kurzzeitig verändert wird. Die Lichtemission der Lichtquellen wird sequenziell so verändert, dass von einer bestimmten, von der Fahrzeugleuchte entfernten Betrachtungsposition aus zumindest zunächst ein von einer ersten Lichtquelle emittierter Lichtstrahl, dessen Richtung von einer ersten Facettenfläche bei einer ersten Facettenposition verändert wurde, kurzzeitig sichtbar ist, danach ein von einer zweiten Lichtquelle emittierter Lichtstrahl, dessen Richtung von einer zweiten Facettenfläche bei einer zweiten Facettenposition verändert wurde, kurzzeitig sichtbar ist und anschließend ein von einer dritten Lichtquelle emittierter Lichtstrahl, dessen Richtung von einer dritten Facettenfläche bei einer dritten Facettenposition verändert wurde, kurzzeitig sichtbar ist. Die erste, zweite und dritte Facettenposition sind dabei jeweils beabstandet voneinander angeordnet, wobei die Lichtquellen so angesteuert werden, dass sich bei der Betrachtungsposition ein Funkeleffekt ergibt, bei dem nacheinander eine oder mehrere Facettenflächen bei verschiedenen Positionen aufgrund von reflektierten Lichtstrahlen aufblitzen, wobei die Lichtquellen nacheinander oder in einer beliebigen Reihenfolge Licht emittieren.

Durch die sequenzielle Ansteuerung der Lichtquellen sowie die Geometrie der Fahrzeugleuchte ergibt sich ein Funkeleffekt, ohne dass sich die relative Position des Betrachters zu der Fahrzeugleuchte verändern muss. Hierdurch wird der Fahrzeugleuchte ein besonders charakteristisches Erscheinungsbild verliehen. Außerdem nimmt der Betrachter eine Lichtfunktion, die von dem erfindungsgemäßen Verfahren bereitgestellt wird, aufgrund des Funkeleffekts besonders leicht und verlässlich wahr.

Bei dem erfindungsgemäßen Verfahren werden die Lichtquellen insbesondere so angesteuert, dass von der ersten Betrachtungsposition aus ein von der ersten Lichtquelle emittierter Lichtstrahl, dessen Richtung von einer zu der ersten Facettenfläche direkt benachbarten Facettenfläche verändert wurde, nicht sichtbar ist. Auch die Lichtstrahlen von der zweiten bzw. dritten Lichtquelle, deren Richtungen von zu der zweiten bzw. dritten Facettenfläche benachbarten Facettenfläche verändert wurden, sind von der ersten Betrachtungsposition aus nicht sichtbar. Hierdurch wird vorteilhafterweise erreicht, dass für den Betrachter von der ersten Betrachtungsposition aus Lichtimpulse von verschiedenen beabstandeten, d.h. nicht benachbarten, Positionen aus kurzzeitig aufblitzen. Dieser Funkeleffekt wird insbesondere für eine Vielzahl von Betrachtungspositionen innerhalb eines bestimmten Raumwinkels erzeugt.

Gemäß einer Ausgestaltung des erfindungsgemäßen Verfahrens wird bei der Sequenz die Lichtemission der ausgewählten Lichtquelle von einem ersten Zustand in einen zweiten Zustand versetzt. Bei dem ersten Zustand kann die Lichtquelle z. B. kein Licht emittieren oder Licht mit eine geringeren Intensität emittieren. In dem zweiten Zustand wird die ausgewählte Lichtquelle dann so angesteuert, dass sie Licht mit einer höheren Lichtintensität emittiert. Die geringere Lichtintensität des ersten Zustands kann beispielsweise in einem Bereich von 0 bis 50 % der Lichtintensität des zweiten Zustands sein. Vorteilhafterweise können mittels der beiden Zustände der Lichtemission der Lichtquellen verschiedene Lichtfunktionen der Fahrzeugleuchte realisiert werden, wobei zumindest bei einer Lichtfunktion der vorstehend beschriebene Funkeleffekt auftritt.

Bei der Sequenz wird zunächst eine echte Teilmenge der Lichtquellen ausgewählt. Die Lichtemission dieser Teilmenge wird dann für ein definiertes Zeitintervall verändert, beispielsweise von dem ersten Zustand in den zweiten Zustand versetzt. Danach wird eine andere Teilmenge der Lichtquellen ausgewählt. Diese Teilmenge unterscheidet sich von der zuvor ausgewählten Teilmenge. Es ist jedoch möglich, dass Lichtquellen in der Schnittmenge der beiden Teilmengen enthalten sind. Alternativ wird ausgeschlossen, dass es eine Schnittmenge gibt. In diesem Fall unterscheiden sich die Teilmengen somit vollständig. Für diese zweite Teilmenge wird dann die Lichtemission für das definierte Zeitintervall verändert. Zwischen den aufeinanderfolgenden Zeitintervallen kann es ein Zwischenzeitintervall geben, in welchem die Lichtemission keiner Lichtquelle verändert wird. Ferner können die beiden Zeitintervalle direkt aufeinanderfolgend sein. Schließlich ist es auch möglich, dass die Zeitintervalle überlappen. Alle diese Ausgestaltungen sind separat von der Erfindung in Verbindung mit den verschiedenartigen Gestaltungen des Optikelements umfasst. Anschließend wird erneut eine dritte Teilmenge der Lichtquellen ausgewählt. Das Verhältnis dieser dritten Teilmenge zu der zweiten Teilmenge kann dasselbe sein, wie das Verhältnis der ersten Teilmenge zu der zweiten Teilmenge. Für das Verhältnis der ersten Teilmenge zu der dritten Teilmenge kann festgelegt sein, dass die dritte Teilmenge nicht identisch mit der ersten Teilmenge sein darf, dass jedoch die Schnittmenge zwischen der dritten Teilmenge und der ersten Teilmenge eine echte Unterteilmenge der ersten und der dritten Teilmenge enthalten darf. Alternativ kann festgelegt sein, wieviel definierte Zeitintervalle zwischen einer erneuten Veränderung der Lichtemission einer bestimmten Lichtquelle liegen müssen. Hierdurch wird dann die Mindestlänge, z.B. des ersten Zustands der Lichtquellen, festgelegt.

Gemäß einer Ausgestaltung des erfindungsgemäßen Verfahrens wird die Auswahl der Lichtquellen zufällig ausgewählt. Hierfür kann ein Zufallsgenerator verwendet werden. Die zufällige Auswahl der Lichtquellen kann jedoch durch die vorgenannten Nebenbedingungen eingeschränkt werden. Hierdurch wird vorteilhafterweise sichergestellt, dass ein besonders charakteristischer und realitätsnaher Funkeleffekt erzeugt wird.

Gemäß einer anderen Ausgestaltung des erfindungsgemäßen Verfahrens ist die Auswahl der Lichtquellen in der Sequenz vorab in einem bestimmten Muster gespeichert. In diesem Fall wird vorteilhafterweise die Charakteristik des Funkeleffekt im Voraus exakt festgelegt.

Die Lichtintensität der ausgewählten Lichtquelle wird insbesondere kurzzeitig erhöht. Dies führt bei dem Funkeleffekt vorteilhafterweise zu einem Aufblitzen von Lichtpulsen.

Gemäß einer Weiterbildung des erfindungsgemäßen Verfahrens emittieren alle Lichtquellen oder eine definierte Teilmenge der Lichtquellen zum Bereitstellen einer ersten Lichtfunktion insgesamt jeweils Lichtstrahlen einer ersten, geringeren Lichtintensität. Zum Bereitstellen einer zweiten Lichtfunktion wird die Sequenz von Lichtquellen ausgewählt, deren Lichtemission aufeinanderfolgend kurzzeitig erhöht wird. Hierdurch können vorteilhafterweise Lichtfunktionen realisiert werden, welche Licht unterschiedlicher Gesamtintensität emittieren. Bei der ersten Lichtfunktion kann es sich beispielsweise um eine Schlusslichtfunktion eines Fahrzeugs handeln, bei der zweiten Lichtfunktion um eine Bremslichtfunktion oder einen Fahrtrichtungsanzeiger, die bzw. der dann aufgrund des Funkeleffekts vorteilhafterweise sehr verlässlich von einem nachfolgenden Verkehrsteilnehmer wahrgenommen wird.

Wenn die zweite Lichtfunktion einen Fahrtrichtungsanzeiger bereitstellt, kann bei dem erfindungsgemäßen Verfahren ein spezielles Muster für die Sequenz zur Auswahl der Lichtquellen gespeichert sein. Gemäß diesem Muster werden nacheinander auf einer Linie angeordnete Lichtquellen der Reihe nach ausgewählt, sodass vorteilhafterweise ein funkelndes Lauflicht erzeugt wird, bei dem neben dem Funkeleffekt eine Steigerung der Lichtintensität in einer Richtung entlang läuft.

Von der erfindungsgemäßen Fahrzeugleuchte bzw. von dem erfindungsgemäßen Verfahren können auch verschiedene andere Lichtfunktionen eines Fahrzeugs erzeugt werden. Durch das Optikelement wird die für die Lichtfunktion erforderliche Abstrahlcharakteristik erzeugt. Bei der Lichtfunktion handelt es sich z. B. um eine Schlusslichtfunktion, eine Bremslichtfunktion, einen Fahrtrichtungsanzeiger oder eine Nebelschlussleuchte einer Heckleuchte eines Fahrzeugs. Erfindungsgemäß wird diesen Lichtfunktionen ein besonders charakteristisches Erscheinungsbild verliehen, an welches sich der Betrachter sehr leicht erinnert und welches der Betrachter sehr verlässlich wahrnimmt.

Die Erfindung wird nun anhand von Ausführungsbeispielen mit Bezug zu den Zeichnungen erläutert.
- Figur 1: zeigt schematisch den grundsätzlichen Aufbau eines Ausführungsbeispiels der erfindungsgemäßen Fahrzeugleuchte,
- Figur 2: zeigt perspektivisch ein Beispiel für die Form eines Reflektors des Ausführungsbeispiels der Fahrzeugleuchte gemäß der vorliegenden Erfindung,
- Figur 3: zeigt eine Detailansicht eines Beispiels einer Reflektorfläche wie sie bei einem Ausführungsbeispiel der vorliegenden Erfindung eingesetzt wird,
- Figur 4: zeigt ein weiteres Detail mit den Facettenflächen des in Figur 3 gezeigten Reflektors,
- Figur 5: zeigt eine Darstellung zur Erläuterung der Position und Ausrichtung der Facettenflächen relativ zu den Positionen der Lichtquellen des Ausführungsbeispiels der erfindungsgemäßen Fahrzeugleuchte und
- Figur 6: zeigt die Geometrie optisch wirksamer Elemente, die gemäß einem weiteren Ausführungsbeispiel in einer Lichtscheibe der erfindungsgemäßen Fahrzeugleuchte angeordnet sind.

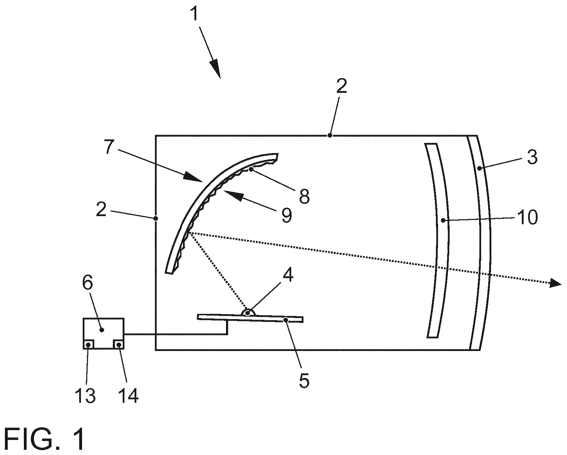

Der grundsätzliche Aufbau der Fahrzeugleuchte 1 wird mit Bezug zu Figur 1 erläutert:
Die Fahrzeugleuchte 1 ist in einem Gehäuse 2 untergebracht, welches in der Lichtemissionsrichtung der Fahrzeugleuchte 1 von einer transparenten Außenlichtscheibe 3 abgeschlossen ist. Die Fahrzeugleuchte 1 umfasst zumindest drei Lichtquellen 4, die auf einer Platine 5 angeordnet sind und mittels einer Steuereinheit 6 angesteuert werden. Die Lichtquellen 4 sind bei verschiedenen Positionen angeordnet, wie es später im Detail erläutert wird. Bei den Lichtquellen 4 handelt es sich insbesondere um Leuchtdioden. In Lichtemissionsrichtung der Lichtquellen 4 ist ein Optikelement 7 angeordnet. Im vorliegenden Ausführungsbeispiel ist das Optikelement 7 ein Reflektor 7, insbesondere ein zusammenhängender Reflektor 7. Dieser Reflektor 7 weist eine Reflektorfläche 8 auf, welche den Lichtquellen 4 zugewandt ist, sodass von den Lichtquellen 4 emittierte Lichtstrahlen auf die Reflektorfläche 8 treffen. Die von der Reflektorfläche 8 reflektierten Lichtstrahlen treten durch die Außenlichtscheibe 3 nach außen.
Die Reflektorfläche 8 weist zwar eine bestimmte geometrische Form auf. Bei dieser grundsätzlichen Form der Reflektorfläche 8 ist jedoch eine Mikrostruktur vorgesehen. Die Reflektorfläche 8 umfasst eine Vielzahl von Facettenflächen 9. Die von den Lichtquellen 4 emittierten Lichtstrahlen werden somit an den Facettenflächen 9 der Reflektorfläche 8 reflektiert, sodass die von den Lichtquellen 4 emittierten Lichtstrahlen in ihrer Richtung verändert werden. Die Richtung des an einer Facettenfläche 9 reflektierten Lichtstrahls wird dabei durch die Position und Ausrichtung der Facettenfläche 9 relativ zu der Position der jeweiligen Lichtquelle 4 bestimmt.

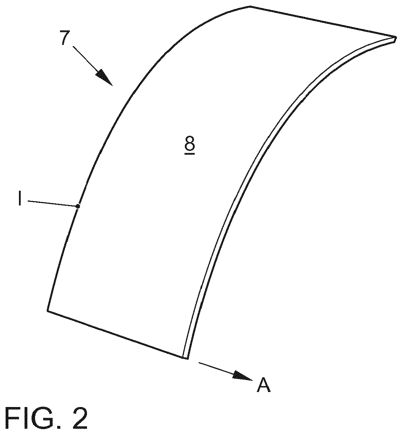

In Figur 2 ist perspektivisch die grundsätzliche Form des Reflektors 7 mit der Reflektorfläche 8 gezeigt. Im Querschnitt liegt die Reflektorfläche 8 des Reflektors 7 auf einer parabolischen Linie I. Die Reflektorfläche 8 ist dann durch ein Verschieben dieser parabolischen Linie I auf einer Geraden gebildet, die in Richtung des Pfeils A verläuft. Bei einem Querschnitt, der senkrecht auf dieser Richtung A steht, ist die Form der Reflektorfläche 8 somit jeweils von einer parabolischen Linie I gebildet. Der Reflektor 7 weist somit die Form einer Rinne auf, die im Querschnitt parabolisch ist. Zu jeder parabolischen Linie I eines Querschnitts gibt es einen Brennpunkt. In Richtung A entsteht somit eine Brennlinie für den Reflektor 7. Die Lichtquellen 4 sind bei dem vorliegenden Ausführungsbeispiel auf dieser Brennlinie angeordnet. Die von den Lichtquellen 4 emittierten Lichtstrahlen erreichen dabei alle Facettenflächen 9 der Reflektorfläche 8. Die Richtung, in welche diese Lichtstrahlen dann reflektiert werden, hängt von der relativen Position und Ausrichtung der Facettenfläche 9 zu der Position der Lichtquelle 4 ab, welche den Lichtstrahl emittiert hat.

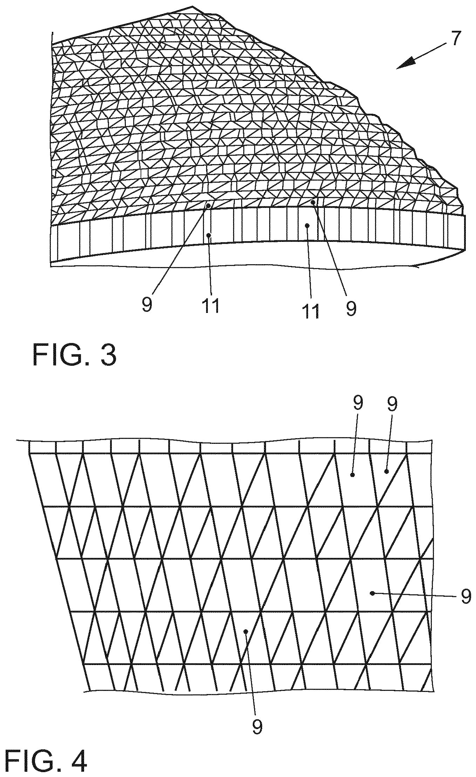

In Figur 3 ist eine Detailansicht des Reflektors 7 gezeigt. Der Reflektor 7 setzt sich dabei aus Segmenten 11 zusammen, welche auf ihrer Oberfläche bei der Reflektorfläche 8 die Facettenflächen 9 bilden.

In Figur 4 sind die Facettenflächen 9 im Detail gezeigt. Sie umfassen viereckige und dreieckige Flächen. Insbesondere wird eine Kombination aus rechteckigen und dreieckigen Flächen gewählt. Die Facettenflächen 9 sind plan, sie weisen keine Krümmung auf, d. h. es handelt sich um ebene Flächen. Zwischen benachbarten Facettenflächen 9 sind Kanten gebildet, die einen möglichst kleinen Radius aufweisen. Die Ausrichtung der Normalen auf einer Facettenfläche 9 unterscheidet sich zu der Ausrichtung der Normalen aller benachbarten Facettenflächen 9. Durch die Facettenflächen 9 wird die Reflektorfläche 8 vollständig ausgefüllt.

Die Facettenflächen 9 sind außerdem spiegelnd, d.h. der Einfallswinkel eines einfallenden Lichtstrahls ist gleich dem Ausfallswinkel des reflektierten Lichtstrahls. Parallele Lichtstrahlen, die auf die Facettenfläche 9 treffen, werden bei einer bestimmten Facettenfläche 9 entsprechend dem Reflexionsgesetz reflektiert. Da die Normale jeder benachbarten Facettenfläche anders ausgerichtet ist, ist die Veränderung der Richtung der reflektierten Lichtstrahlen bei einem Übergang von einer Facettenfläche 9 zu einer anderen Facettenfläche 9 unstetig.

Insgesamt sind die Facettenflächen 9 auf der Reflektorfläche 8 so positioniert und ausgerichtet, dass eine erste Lichtfunktion eines Fahrzeugs bereitgestellt werden kann, wenn alle Lichtquellen 4 oder eine Teilmenge davon mit einer definierten Intensität Licht emittieren. Es wird die definierte Abstrahlcharakteristik dieser Lichtfunktion durch die Reflektion der Lichtstrahlen an den Facettenflächen 9 der Reflektorfläche 8 bereitgestellt. Des Weiteren sind die Facettenflächen 9 so positioniert und ausgerichtet, dass eine zweite Lichtfunktion eines Fahrzeugs bereitgestellt wird, wenn die Lichtemission eines Teils der Lichtquellen 4 verändert wird im Vergleich zu der Lichtemission für die Bereitstellung der ersten Lichtfunktion. Die Veränderung der Lichtemission ist dabei insbesondere zeitlich veränderlich. Des Weiteren wird die Lichtemission so verändert, dass zumindest ein Teil der Lichtquellen 4 zumindest zeitweise eine andere Lichtintensität emittiert.

Auf diese Weise kann durch eine geeignete Steuerung der Lichtquellen 4 mittels der Steuereinheit 6 jede Lichtfunktion eines Scheinwerfers eines Fahrzeugs oder einer Heckleuchte eines Fahrzeugs bereitgestellt werden. Die erfindungsgemäße Fahrzeugleuchte wird insbesondere als Heckleuchte eingesetzt. Es können somit die Schlusslichtfunktion, die Bremslichtfunktion, die Funktion einer Nebelschlussleuchte und/oder die Funktion eines Fahrtrichtungsanzeigers bereitgestellt werden. Alternativ oder zusätzlich können auch noch weitere Signalfunktionen bereitgestellt werden.

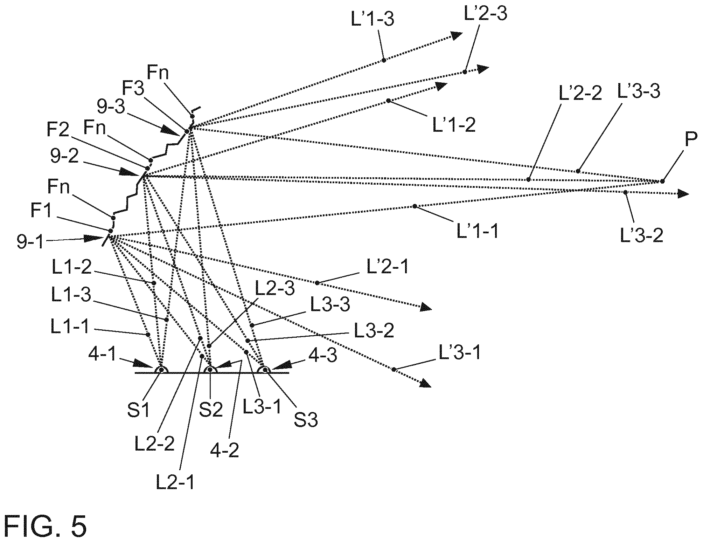

Mit Bezug zur Figur 5 wird die Geometrie der Facettenfläche 9 relativ zu den Positionen der Lichtquellen 4 im Detail erläutert:
Es werden dabei drei Lichtquellen 4-1, 4-2 und 4-3 betrachtet. Es wird darauf hingewiesen, dass die Fahrzeugleuchte 1 eine beliebige andere Anzahl an weiteren Lichtquellen 4 umfassen kann, die bei jeweils verschiedenen Positionen angeordnet sind. Die Lichtquelle 4-1 ist bei der Position S1, die Lichtquelle 4-2 bei der Position S2 und die Lichtquelle 4-3 bei der Position S3 angeordnet. Auf dem Reflektor 7 sind bei der Reflektorfläche 8 unter anderem die Facetten 9-1, 9-2 und 9-3 bei den Positionen F1, F2 und F3 angeordnet. Die Positionen F1, F2 und F3 sind beabstandet voneinander, sodass zwischen diesen Positionen weitere Facettenflächen 9 bei den allgemein mit Fn bezeichneten Positionen angeordnet sind.

Es werden nun die Lichtstrahlen untersucht, welche auf eine bestimmte Betrachtungsposition P in Lichtemissionsrichtung der Fahrzeugleuchte 1 treffen. Es wird somit untersucht, wie ein Betrachter bei der Betrachtungsposition P die Fahrzeugleuchte 1 wahrnimmt.

Die Lichtquelle 4-1 bei der Position S1 emittiert die Lichtstrahlen L1-1, L1-2 und L1-3. Der Lichtstrahl L1-1 trifft auf die Facettenfläche 9-1 bei der Position F1, der Lichtstrahl L1-2 trifft auf die Facettenfläche 9-2 bei der Position F2 und der Lichtstrahl L1-3 trifft auf die Facettenfläche 9-3 bei der Position F3. Die Facettenfläche 9-1 ist nun so ausgerichtet, dass der Lichtstrahl L1-1 so reflektiert wird, dass der reflektierte Lichtstrahl L'1-1 zur Betrachtungsposition P gelangt, sodass dieser Lichtstrahl von einem Betrachter bei der Betrachtungsposition P sichtbar ist. Eine Veränderung der Lichtintensität der Lichtquelle 4-1 nimmt somit ein Betrachter bei der Betrachtungsposition P als Veränderung der Lichtemission bei der Facettenfläche 9-1 bei der Position F1 wahr.

Die Facettenfläche 9-2 bei der Position F2 ist nun so ausgerichtet, dass der Lichtstrahl L1-2 so reflektiert wird, dass der reflektierte Lichtstrahl L'1-2 nicht auf die Betrachtungsposition P trifft. Er ist somit aus der Betrachtungsposition P auch nicht sichtbar. Gleichermaßen ist auch die Facettenfläche 9-3 bei der Position F3 so ausgerichtet, dass der Lichtstrahl L1-3 so reflektiert wird, dass der reflektierte Lichtstrahl L'1-3 nicht auf die Betrachtungsposition P trifft.

Die zweite Lichtquelle 4-2 emittiert unter anderem den Lichtstrahl L2-1 in Richtung der Position F1 der Facettenfläche 9-1, den Lichtstrahl L2-2 in Richtung der Position F2 der Facettenfläche 9-2 und den Lichtstrahl L2-3 in Richtung der Position F3 der Facettenfläche 9-3. Der Lichtstrahle L2-1 wird dabei an der Facettenfläche 9-1 so reflektiert, dass der reflektierte Lichtstrahl L'2-1 nicht zu der Betrachtungsposition P gelangt. Gleichermaßen wird der Lichtstrahl L2-3 an der Facettenfläche 9-3 so reflektiert, dass der reflektierte Lichtstrahl L'2-3 nicht zu der Betrachtungsposition P gelangt. Die Facettenfläche 9-2 bei der Position F2 ist hingegen so ausgerichtet, dass der Lichtstrahl L2-2 so reflektiert wird, dass der reflektierte Lichtstrahl L'2-2 auf die Betrachtungsposition P trifft, sodass eine Veränderung der Lichtemission der zweiten Lichtquelle 4-2 von einem Betrachter bei der Betrachtungsposition P bei der Position F3 wahrnehmbar ist.

Die dritte Lichtquelle 4-3 emittiert unter anderem die Lichtstrahlen L3-1, L3-2 und L3-3. Dabei wird der Lichtstrahl L3-1 von der Facettenfläche 9-1 so reflektiert, dass der reflektierte Lichtstrahl L'3-1 nicht auf die Betrachtungsposition P trifft. Gleichermaßen wird der Lichtstrahl L3-2 so von der Facettenfläche 9-2 so reflektiert, dass der reflektierte Lichtstrahl L'3-2 nicht auf die Betrachtungsposition P trifft. Die Facettenfläche 9-3 ist hingegen so ausgerichtet, dass der Lichtstrahl L3-3 so reflektiert wird, dass der reflektierte Lichtstrahl L'3-3 auf die Betrachtungsposition P trifft.

Des Weiteren sind zu den Facettenflächen 9-1, 9-2 und 9-3 benachbarte Facettenflächen bei den Positionen Fn so ausgerichtet, dass die von den Lichtquellen 4-1, 4-2 und 4-3 emittierten Lichtstrahlen so reflektiert werden, dass sie nicht auf die Betrachtungsposition P treffen.

Es wird darauf hingewiesen, dass die Betrachtungsposition P beliebig innerhalb eines Raumwinkels von der Lichtquelle 1 gewählt werden kann, sodass die vorstehend bestehenden Reflektionen an den Facettenflächen 9 entsprechend auch für andere Betrachtungspositionen gelten.

Werden alle Facettenflächen 9 der Reflektorfläche 8 betrachtet, so gibt es bei einem Ausführungsbeispiel mehrere, jedoch beabstandete und nicht benachbarte Facettenflächen 9, welche die von der ersten Lichtquelle 4-1 emittierten Lichtstrahlen in Richtung der Betrachtungsposition P reflektieren. Gleichermaßen gibt es mehrere beabstandete und nicht benachbarte Facettenflächen 9, die von der zweiten Lichtquelle 4-2 emittierte Lichtstrahlen zu der Betrachtungsposition P reflektieren und auch für die dritte Lichtquelle 4-3 gibt es mehrere beabstandete, jedoch nicht benachbarte Facettenflächen 9, die Lichtstrahlen dieser Lichtquelle 4-3 in Richtung der Betrachtungsposition P reflektieren. Zur Vereinfachung werden im Folgenden die Facettenflächen 9, welche Lichtstrahlen von einer bestimmten Lichtquelle 4 zu der Betrachtungsposition P reflektieren, als eine Teilmenge der Facettenflächen 9 bezeichnet, die dieser Lichtquelle 4 zugeordnet sind.

Bei weiteren Ausführungsbeispielen umfasst die Fahrzeugleuchte 1 eine größere Anzahl an Lichtquellen 4. In diesem Fall kann zu jeder weiteren Lichtquelle 4 eine weitere Teilmenge von Facettenflächen 9 gebildet sein, die entsprechende Lichtstrahlen von dieser weiteren Lichtquelle 4 zu der Betrachtungsposition P reflektieren. Die Anzahl der Teilmengen der Facettenflächen 9 entspricht somit normalerweise der Anzahl der Lichtquellen 4.

Im Folgenden wird ein Ausführungsbeispiel des erfindungsgemäßen Verfahrens erläutert, welches mittels der vorstehend beschriebenen Fahrzeugleuchte ausgeführt werden kann:
Bei dem im Folgenden beschriebenen Verfahren wird mittels der Fahrzeugleuchte 1 die Bremslichtfunktion bereitgestellt. Es wird jedoch darauf hingewiesen, dass das Verfahren entsprechend angewendet werden kann, um eine andere Lichtfunktion bereitzustellen oder eine Kombination von Lichtfunktionen zu realisieren.

In der Steuereinheit 6 ist ein Speicher 13 vorgesehen, in dem ein Muster gespeichert ist, welches eine aufeinanderfolgende Auswahl von Lichtquellen 4 bestimmt, deren Lichtemission für ein kurzes Zeitintervall verändert wird. Ferner ist in dem Speicher 13 die Länge dieses Zeitintervalls gespeichert. Des Weiteren kann ggf. die Länge eines Zwischenzeitintervalls gespeichert sein, welches zwischen zwei benachbarten Zeitintervallen liegt, bei denen die Lichtemission von verschiedenen Lichtquellen verändert wird.

Es wird im Folgenden beispielhaft angenommen, dass insgesamt 16 Lichtquellen 4 in der Fahrzeugleuchte 1 vorgesehen sind. Das Muster wählt nun eine erste Teilmenge dieser Lichtquellen 4 für ein erstes Zeitintervall aus. Für dieses Zeitintervall werden diese Lichtquellen 4 der ersten Teilmenge von einem ersten Zustand in einen zweiten Zustand versetzt. Der Einfachheit halber wird im Folgenden davon ausgegangen, dass im ersten Zustand die Lichtquellen 4 ausgeschaltet sind und im zweiten Zustand die Lichtquellen 4 eingeschaltet sind.

Für ein kurzes Zeitintervall von beispielsweise 100 ms werden die Lichtquellen 4 der ersten Teilmenge nun mittels der Steuereinheit 6 in den zweiten Zustand versetzt, d.h. eingeschaltet. Für dieses Zeitintervall sieht ein Betrachter bei der Betrachtungsposition P nun Lichtimpulse bei den Positionen der Facettenflächen 9, die den Lichtquellen 4 dieser Teilmenge so zugeordnet sind, d. h. die den Lichtquellen 4 zugeordneten Teilmengen der Facettenflächen 9. Von diesen Facettenflächen 9 werden Lichtstrahlen von den Lichtquellen 4 der ersten Teilmenge zu der Betrachtungsposition P reflektiert. Nach Ablauf des ersten Zeitintervalls werden die Lichtquellen 4 dieser ersten Teilmenge wieder in den ersten Zustand versetzt, d.h. ausgeschaltet.

Für das sich anschließende zweite Zeitintervall bestimmt das in dem Speicher 13 gespeicherte Muster der Steuereinheit 6, dass eine andere, zweite Teilmenge der Lichtquellen 4, die sich vollständig von der vorherigen Teilmenge unterscheidet, eingeschaltet wird. Für das zweite Zeitintervall sieht ein Betrachter bei der Betrachtungsposition P somit Lichtstrahlen der Teilmengen der Facettenflächen 9, die den Lichtquellen 4 zugeordnet sind, d. h. die das Licht dieser Lichtquellen 4 zu der Betrachtungsposition P reflektieren. Wie vorstehend beschrieben sind diese Facettenflächen 9 beabstandet und nicht benachbart zu den Facettenflächen 9, von welchen ein Betrachter bei der Betrachtungsposition P beim ersten Zeitintervall Lichtstrahlen gesehen hat.

Bei sich anschließenden Zeitintervallen werden wiederum weitere Teilmengen der Lichtquellen 4 mittels des in dem Speicher 13 gespeicherten Musters ausgewählt, sodass bei diesem Zeitintervall der Betrachter bei der Betrachtungsposition P jeweils sich verändernde Lichtimpulse von aufeinanderfolgend anderen Facettenflächen 9 wahrnimmt. Mittels des Musters wird somit eine Sequenz von Lichtquellen ausgewählt, deren Lichtemission aufeinander folgend kurzzeitig verändert, insbesondere erhöht wird. Insgesamt nimmt ein Betrachter von beliebigen Betrachtungspositionen P ein Funkeln der Lichtemission der Fahrzeugleuchte 1 wahr, und zwar ohne dass sich die relative Position der Fahrzeugleuchte 1 zu der Betrachtungsposition P ändern muss. Wenn sich allerdings die relative Position der Fahrzeugleuchte 1 zu der Betrachtungsposition verändert, wird auch ein Funkeln wahrgenommen, da dieser Funkeleffekt für beliebige Betrachtungspositionen P erzeugt wird. Dieser Funkeleffekt unterscheidet sich jedoch von einem einleitend erwähnten Glitzereffekt, der nur auftritt, wenn sich die Betrachtungsposition relativ zu der Fahrzeugleuchte 1 verändert.

Bei einem weiteren Ausführungsbeispiel ist alternativ oder zusätzlich ein Zufallsgenerator 14 in die Steuereinheit 6 integriert. In diesem Fall wird die Sequenz von Lichtquellen 4 zufällig ausgewählt, wobei die Steuereinheit 6 die vorstehend genannten Nebenbedingungen berücksichtigt. Bei aufeinanderfolgenden Zeitintervallen werden somit nicht dieselben Lichtquellen 4 ausgewählt. Die ausgewählten Teilmengen für aufeinanderfolgende Zeitintervalle unterscheiden sich somit insbesondere vollständig.

Es wird darauf hingewiesen, dass die vorstehend beschriebene Steuerung der Lichtquellen 4 mittels der Steuereinheit 6 für verschiedene Beispiele von Formen und Ausrichtungen der Reflektorfläche 8 und der Facettenflächen 9 verwendet werden kann. Gleichermaßen bilden verschiedene Gestaltungen und Geometrien der Reflektorfläche 8 und der zugehörigen Facettenflächen 9 in Verbindung mit den verschiedenen beschriebenen Steuerungen der Lichtquellen 4 weitere Ausführungsbeispiele, die unabhängig voneinander von der Erfindung umfasst sind. Dabei wird jedoch bei allen zu der Erfindung gehörigen Ausführungsbeispielen der vorstehend beschriebene Funkeleffekt bei verschiedenen Betrachtungspositionen P erzeugt.

Bei einem weiteren Ausführungsbeispiel des erfindungsgemäßen Verfahrens wird mittels der Fahrzeugleuchte 1 die Schlusslichtfunktion und die Bremslichtfunktion bereitgestellt. In diesem Fall steuert die Steuereinheit 6 die Lichtquellen 4 zum Bereitstellen der Schlusslichtfunktion so an, dass Lichtstrahlen einer ersten, geringeren Lichtintensität emittiert werden. Zum Bereitstellen der Bremslichtfunktion wird, wie vorstehend beschrieben, eine Sequenz von Lichtquellen 4 ausgewählt, deren Lichtemission aufeinanderfolgend kurzzeitig erhöht wird. Die Bremslichtfunktion zeichnet sich somit durch eine erhöhte Lichtemission und einen Funkeleffekt aus. Die emittierte Lichtintensität einer Lichtquelle 4 kann für die Schlusslichtfunktion z. B. 10% der emittierten Lichtintensität für die Bremslichtfunktion sein.

Bei einem noch weiteren Ausführungsbeispiel des erfindungsgemäßen Verfahrens wird mittels der Fahrzeugleuchte 1 die Schlusslichtfunktion und die Funktion des Fahrtrichtungsanzeigers bereitgestellt. Wie im vorstehenden Ausführungsbeispiel steuert die Steuereinheit 6 die Lichtquellen 4 zum Bereitstellen der Schlusslichtfunktion so an, dass Lichtstrahlen einer ersten, geringeren Lichtintensität emittiert werden. Zum Bereitstellen eines Fahrtrichtungsanzeigers wird nun eine Sequenz von neben einander angeordneten Lichtquellen 4 ausgewählt, deren Lichtemission aufeinander folgend kurzzeitig erhöht wird. Die Sequenz wird dabei so gewählt, dass nacheinander im Wesentlichen auf einer Linie angeordnete Lichtquellen 4 der Reihe nach ausgewählt werden, sodass ein funkelndes Lauflicht erzeugt wird, bei dem neben dem Funkeleffekt eine Steigerung der Lichtintensität entlang einer Richtung läuft. Das spezielle Muster für die Sequenz zur Auswahl der Lichtquellen 4 für die Funktion des Fahrtrichtungsanzeigers ist in dem Speicher 13 gespeichert.

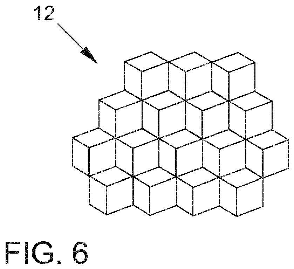

Ein weiteres Ausführungsbeispiel wird nun mit Bezug zu den Figuren 1 und 6 beschrieben. Es kann mit allen vorstehend beschriebenen Ausgestaltungen und Ausführungsbeispielen kombiniert werden.

Gemäß diesem weiteren Ausführungsbeispiel sind weitere optisch wirksame Elemente 12, wie sie in Figur 6 dargestellt sind, in die Außenlichtscheibe 3 integriert. Gemäß einem noch weiteren Ausführungsbeispiel ist zwischen der Außenlichtscheibe 3 und dem Reflektor 7 eine Zwischenlichtscheibe 10 vorgesehen. In diesem Fall können die weiteren optischen Elemente 12 alternativ oder zusätzlich in die Zwischenlichtscheibe 10 integriert sein.

Die weiteren optisch wirksamen Elemente 12 sind in einem Teilbereich der Außenlichtscheibe 3 und/oder der Zwischenlichtscheibe 10 vorgesehen. Die optisch wirksamen Elemente 12 sind so ausgebildet, dass von dem Reflektor 7 kommende Lichtstrahlen durch sie durchtreten, jedoch in ihrer Richtung durch Brechung verändert werden. Durch die Elemente 12 wird der Funkeleffekt bei der Betrachtungsposition P somit nicht mehr bei den Facettenflächen 9 wahrgenommen, sondern bei den Elementen 12, sofern die Lichtstrahlen, die zu der Betrachtungsposition P gelangen, in ihrer Richtung durch die Elemente 12 verändert worden sind. Lichtstrahlen, die hingegen ohne wesentliche Veränderung ihrer Richtung durch die Außenlichtscheibe 3 und/oder die Zwischenlichtscheibe 10 bei Bereichen durchtreten, bei denen die optisch wirksamen Elemente 12 nicht vorgesehen sind, werden bei der Betrachtungsposition P hingegen weiter so wahrgenommen, dass der Funkeleffet bei dem Reflektor 7 wahrgenommen wird. Es ergibt sich bei diesem Ausführungsbeispiel somit ein Funkeleffekt in zwei Ebenen bzw. in drei Ebenen, wenn die optisch wirksamen Elemente 12 sowohl bei der Außenlichtscheibe 3 und der Zwischenlichtscheibe 10 vorgesehen sind.

Bei einem weiteren Ausführungsbeispiel sind die optisch wirksamen Elemente 12 über die gesamte Außenlichtscheibe 3 oder die gesamte Zwischenlichtscheibe 10 angeordnet. In diesem Fall wird der Funkeleffekt für den Betrachter bei der Betrachtungsposition P vollständig in die Ebene der Außenlichtscheibe 3 oder der Zwischenlichtscheibe 10 verlagert.

Bei einem weiteren Ausführungsbeispiel sind die optisch wirksamen Elemente 12 zusätzlich so ausgestaltet, dass sie von außen auf die Außenlichtscheibe 3 oder die Zwischenlichtscheibe 10 auftretendes Licht zurückreflektieren. Hierfür sind beispielsweise bei den optisch wirksamen Elementen 12 weitere Facettenflächen gebildet durch welche zwar von dem Reflektor 7 kommende Lichtstrahlen durchtreten, welche jedoch von außen auftreffende Lichtstrahlen reflektieren. Diese weiteren Facettenflächen sind insbesondere in unterschiedlichen Winkeln zueinander in einem sich nicht wiederholenden Muster angeordnet. Auf diese Weise wird ein Glitzereffekt durch zurückreflektierte Lichtstrahlen erzeugt, und zwar auch dann, wenn die Fahrzeugleuchte 1 vollständig ausgeschaltet ist. Dieser Glitzereffekt tritt dann in der Ebene der Außenlichtscheibe 3 oder der Zwischenlichtscheibe 10 auf.

### Bezugszeichenliste

- 1: Fahrzeugleuchte
- 2: Gehäuse
- 3: Außenlichtscheibe
- 4, 4-1, 4-2, 4-3: Lichtquellen
- 5: Platine
- 6: Steuereinheit
- 7: Reflektor; Optikelement
- 8: Reflektorfläche
- 9, 9-1, 9-2, 9-3: Facettenflächen
- 10: Zwischenlichtscheibe
- 11: Segmente
- 12: Optisch wirksame Elemente
- 13: Speicher
- 14: Zufallsgenerator
- A: Richtung
- P: Betrachtungsposition
- I: parabolische Linie
- S1, S2, S3: Positionen der Lichtquellen
- F1, F2, F3, Fn: Positionen der Facettenflächen
- L1-1, L1-2, L1-3, L2-1, L2-2, L2-3, L3-1, L3-2, L3-3: Lichtstrahlen
- L'1-1, L'1-2, L'1-3, L'2-1, L'2-2, L'2-3, L'3-1, L'3-2, L'3-3: reflektierte Lichtstrahlen

## Patentansprüche

1. Fahrzeugleuchte (1) mit
zumindest drei bei verschiedenen Positionen (S1, S2, S3) angeordneten Lichtquellen (4), einem Optikelement (7), das eine Vielzahl von Facettenflächen (9) umfasst, wobei die Richtungen von Lichtstrahlen, die von den Lichtquellen (4) in Richtung der Facettenflächen (9) emittierbar sind, durch die Facettenflächen (9) veränderbar sind und einer Steuereinheit (6) zum Ansteuern der Lichtquellen (4), wobei die Positionen und/oder Ausrichtungen der Facettenflächen (9) relativ zu den Positionen der Lichtquellen (4) so angeordnet sind, dass von einer bestimmten, von der Fahrzeugleuchte (1) entfernten Betrachtungsposition (P) aus zumindest ein von einer ersten Lichtquelle (4-1) emittierter und in seiner Richtung von einer ersten Facettenfläche (9-1) bei einer ersten Facettenposition (F1) veränderter Lichtstrahl (L1-1) sichtbar ist, ein von einer zweiten Lichtquelle (4-2) emittierter und in seiner Richtung von einer zweiten Facettenfläche (9-2) bei einer zweiten Facettenposition (F2) veränderter Lichtstrahl (L2-2) sichtbar ist und ein von einer dritten Lichtquelle (4-3) emittierter und in seiner Richtung von einer dritten Facettenfläche (9-3) bei einer dritten Facettenposition (F2) veränderter Lichtstrahl (L3-3) sichtbar ist, wobei die erste, zweite und dritte Facettenposition (F1, F2, F3) jeweils beabstandet voneinander angeordnet sind,
**dadurch gekennzeichnet,**
**dass** die Lichtquellen (4) so ansteuerbar sind, dass sich bei der Betrachtungsposition (P) ein Funkeleffekt ergibt, bei dem nacheinander eine oder mehrere Facettenflächen bei verschiedenen Positionen aufgrund von reflektierten Lichtstrahlen aufblitzen, wobei die Lichtquellen (4) nacheinander oder in einer beliebigen Reihenfolge Licht emittieren.

2. Fahrzeugleuchte (1) nach Anspruch 1,
**dadurch gekennzeichnet,**
**dass** die Positionen und/oder Ausrichtungen der Facettenflächen (9) relativ zu den Positionen der Lichtquellen (4) so angeordnet sind, dass von der Betrachtungsposition (P) aus ein von der ersten Lichtquelle (4-1) emittierter und in seiner Richtung von einer zu der ersten Facettenfläche (9-1) direkt benachbarten Facettenfläche (9) veränderter Lichtstrahl nicht sichtbar ist, ein von der zweiten Lichtquelle (4-2) emittierter und in seiner Richtung von einer zu der zweiten Facettenfläche (9-2) direkt benachbarten Facettenfläche (9) veränderter Lichtstrahl nicht sichtbar ist und ein von der dritten Lichtquelle (4-3) emittierter und in seiner Richtung von einer zu der dritten Facettenfläche (9-1) direkt benachbarten Facettenfläche (9) veränderter Lichtstrahl nicht sichtbar ist.

3. Fahrzeugleuchte (1) nach Anspruch 1 oder 2,
**dadurch gekennzeichnet,**
**dass** die Facettenflächen (9) reflektierend sind.

4. Fahrzeugleuchte (1) nach Anspruch 3,
**dadurch gekennzeichnet,**
**dass** das Optikelement (7) ein zusammenhängender Reflektor (7) mit einer Reflektorfläche (8) ist, auf der die reflektierenden Facettenflächen (9) angeordnet sind, dass ein Querschnitt des Reflektors (7) eine von der Reflektorfläche (8) gebildete parabolische Linie umfasst und dass die Reflektorfläche (8) durch ein Verschieben der parabolischen Linie auf einer Geraden gebildet ist.

5. Fahrzeugleuchte (1) nach Anspruch 4,
**dadurch gekennzeichnet,**
**dass** die Lichtquellen (4) in der Brennlinie der Reflektorfläche (8) angeordnet sind.

6. Fahrzeugleuchte (1) nach einem der vorhergehenden Ansprüche,
**dadurch gekennzeichnet,**
**dass** die Facettenflächen (9) von ebenen Flächen gebildet sind.

7. Fahrzeugleuchte (1) nach einem der vorhergehenden Ansprüche,
**dadurch gekennzeichnet,**
**dass** die Facettenflächen (9) von einer Kombination aus rechteckigen und/oder dreieckigen Flächen gebildet sind.

8. Fahrzeugleuchte (1) nach Anspruch 1 oder 2,
**dadurch gekennzeichnet,**
**dass** die Facettenflächen (9) lichtbrechende Elemente sind, durch welche das von den Lichtquellen (4) emittierte Licht durchtritt.

9. Fahrzeugleuchte (1) nach einem der vorhergehenden Ansprüche,
**dadurch gekennzeichnet,**
**dass** die Steuereinheit (6) einen Zufallsgenerator (14) umfasst, mit dem aufeinanderfolgend zumindest eine Lichtquelle (4) zufällig auswählbar ist, deren Lichtemission für ein kurzes Zeitintervall veränderbar ist.

10. Fahrzeugleuchte (1) nach einem der vorhergehenden Ansprüche,
**dadurch gekennzeichnet,**
**dass** die Steuereinheit (6) einen Speicher (13) umfasst, in dem ein Muster gespeichert ist, welches eine aufeinanderfolgende Auswahl von Lichtquellen (4) bestimmt, deren Lichtemission für ein kurzes Zeitintervall veränderbar ist.

11. Fahrzeugleuchte (1) nach einem der vorhergehenden Ansprüche,
**dadurch gekennzeichnet,**
**dass** in Richtung der von dem Optikelement (7) ausgehenden Lichtstrahlen eine Lichtscheibe (3, 10) mit weiteren optisch wirksamen Elementen (12) angeordnet ist.

12. Verfahren zum Bereitstellen einer Lichtfunktion mittels einer Fahrzeugleuchte (1), die zumindest drei bei verschiedenen Positionen angeordnete Lichtquellen (4) und ein Optikelement (7) aufweist, das eine Vielzahl von Facettenflächen (9) umfasst, wobei die Richtungen von Lichtstrahlen, die von den Lichtquellen (4) emittiert wurden und die auf die Facettenflächen (9) treffen, durch die Facettenflächen (9) verändert werden, wobei eine Sequenz von Lichtquellen (4) ausgewählt wird, deren Lichtemission aufeinanderfolgend kurzzeitig verändert wird, und
die Lichtemission der Lichtquellen (4) sequenziell so verändert wird, dass von einer bestimmten, von der Fahrzeugleuchte (1) entfernten Betrachtungsposition (P) aus zumindest zunächst ein von einer ersten Lichtquelle (4-1) emittierter Lichtstrahl (L1-1), dessen Richtung von einer ersten Facettenfläche (9-1) bei einer ersten Facettenposition (F1) verändert wurde, kurzzeitig sichtbar ist, danach ein von einer zweiten Lichtquelle (4-2) emittierter Lichtstrahl (L2-2), dessen Richtung von einer zweiten Facettenfläche (9-2) bei einer zweiten Facettenposition (F2) verändert wurde, kurzzeitig sichtbar ist und anschließend ein von einer dritten Lichtquelle (4-3) emittierter Lichtstrahl (L3-3), dessen Richtung von einer dritten Facettenfläche (9-3) bei einer dritten Facettenposition (F3) verändert wurde, kurzzeitig sichtbar ist, wobei die erste, zweite und dritte Facettenposition (F1, F2, F3) jeweils beabstandet voneinander angeordnet sind,
**dadurch gekennzeichnet,**
**dass** die Lichtquellen (4) so angesteuert werden, dass sich bei der Betrachtungsposition (P) ein Funkeleffekt ergibt, bei dem nacheinander eine oder mehrere Facettenflächen bei verschiedenen Positionen aufgrund von reflektierten Lichtstrahlen aufblitzen, wobei die Lichtquellen (4) nacheinander oder in einer beliebigen Reihenfolge Licht emittieren.

13. Verfahren nach Anspruch 12,
**dadurch gekennzeichnet,**
**dass** die Sequenz von Lichtquellen (4) zufällig ausgewählt wird.

14. Verfahren nach Anspruch 12 oder 13,
**dadurch gekennzeichnet,**
**dass** die Lichtintensität der ausgewählten Lichtquelle (4) kurzzeitig erhöht wird.

15. Verfahren nach einem der Ansprüche 12 bis 14,
**dadurch gekennzeichnet,**
**dass** die Lichtquellen (4) zum Bereitstellen einer ersten Lichtfunktion insgesamt jeweils Lichtstrahlen einer ersten, geringeren Lichtintensität emittierten und zum Bereitstellen einer zweiten Lichtfunktion die Sequenz von Lichtquellen (4) ausgewählt wird, deren Lichtemission aufeinanderfolgend kurzzeitig erhöht wird.

## Claims

1. Vehicle lamp (1), having
at least three light sources (4) arranged at different positions (S1, S2, S3), an optics element (7) comprising a multiplicity of facet surfaces (9), wherein the directions of light beams that are emittable by the light sources (4) in the direction of the facet surfaces (9) are changeable by the facet surfaces (9), and a control unit (6) for controlling the light sources (4), wherein the positions and/or orientations of the facet surfaces (9) relative to the positions of the light sources (4) are arranged such that, viewed from a specific observation position (P) that is remote from the vehicle lamp (1), at least a light beam (L1-1) that has been emitted by a first light source (4-1) and the direction of which has been changed by a first facet surface (9-1) at a first facet position (F1) is visible, a light beam (L2-2) that has been emitted by a second light source (4-2) and the direction of which has been changed by a second facet surface (9-2) at a second facet position (F2) is visible, and a light beam (L3-3) that has been emitted by a third light source (4-3) and the direction of which has been changed by a third facet surface (9-3) at a third facet position (F2) is visible, wherein the first, second and third facet positions (F1, F2, F3) are arranged in each case at a distance from one another,
**characterized**
**in that** the light sources (4) are controllable such that a sparkling effect is obtained at the observation position (P), in which one or more facet surfaces flash successively at different positions due to reflected light beams, wherein the light sources (4) emit light successively or in any desired order.

2. Vehicle lamp (1) according to Claim 1,
**characterized**
**in that** the positions and/or orientations of the facet surfaces (9) relative to the positions of the light sources (4) are arranged such that, viewed from the observation position (P), a light beam that has been emitted by the first light source (4-1) and the direction of which has been changed by a facet surface (9) directly adjacent to the first facet surface (9-1) is not visible, a light beam that has been emitted by the second light source (4-2) and the direction of which has been changed by a facet surface (9) directly adjacent to the second facet surface (9-2) is not visible, and a light beam that has been emitted by the third light source (4-3) and the direction of which has been changed by a facet surface (9) directly adjacent to the third facet surface (9-1) is not visible.

3. Vehicle lamp (1) according to Claim 1 or 2,
**characterized**
**in that** the facet surfaces (9) are reflective.

4. Vehicle lamp (1) according to Claim 3,
**characterized**
**in that** the optics element (7) is a contiguous reflector (7) having a reflector surface (8) on which the reflective facet surfaces (9) are arranged, in that a cross section of the reflector (7) comprises a parabolic line formed by the reflector surface (8), and in that the reflector surface (8) is formed by displacing the parabolic line along a straight line.

5. Vehicle lamp (1) according to Claim 4,
**characterized**
**in that** the light sources (4) are arranged in the focal line of the reflector surface (8).

6. Vehicle lamp (1) according to one of the preceding claims,
**characterized**
**in that** the facet surfaces (9) are formed by planar surfaces.

7. Vehicle lamp (1) according to one of the preceding claims,
**characterized**
**in that** the facet surfaces (9) are formed by a combination of rectangular and/or triangular surfaces.

8. Vehicle lamp (1) according to Claim 1 or 2,
**characterized**
**in that** the facet surfaces (9) are light-refractive elements through which the light that has been emitted by the light sources (4) passes.

9. Vehicle lamp (1) according to one of the preceding claims,
**characterized**
**in that** the control unit (6) comprises a random generator (14) with which at least one light source (4) whose light emission is changeable for a short time interval is successively randomly selectable.

10. Vehicle lamp (1) according to one of the preceding claims,
**characterized**
**in that** the control unit (6) comprises a memory (13), in which a pattern is stored that determines a successive selection of light sources (4) whose light emissions are changeable for a short time interval.

11. Vehicle lamp (1) according to one of the preceding claims,
**characterized**
**in that** a lens (3, 10) having further optically effective elements (12) is arranged in the direction of the light beams emerging from the optics element (7).

12. Method for providing a light function by means of a vehicle lamp (1) that has at least three light sources (4) arranged at different positions and an optics element (7) comprising a multiplicity of facet surfaces (9), wherein the directions of light beams that have been emitted by the light sources (4) and are incident on the facet surfaces (9) are changed by the facet surfaces (9), wherein a sequence of light sources (4) whose light emission is successively changed for a short time is selected, and
the light emission of the light sources (4) is sequentially changed such that, viewed from a specific observation position (P) that is remote from the vehicle lamp (1), at least initially a light beam (L1-1) that has been emitted by a first light source (4-1) and the direction of which has been changed by a first facet surface (9-1) at a first facet position (F1) is visible for a short time, then a light beam (L2-2) that has been emitted by a second light source (4-2) and the direction of which has been changed by a second facet surface (9-2) at a second facet position (F2) is visible for a short time, and subsequently a light beam (L3-3) that has been emitted by a third light source (4-3) and the direction of which has been changed by a third facet surface (9-3) at a third facet position (F3) is visible for a short time, wherein the first, second and third facet positions (F1, F2, F3) are arranged in each case at a distance from one another,
**characterized**
**in that** the light sources (4) are controlled such that a sparkling effect is obtained at the observation position (P), in which one or more facet surfaces flash successively at different positions due to reflected light beams, wherein the light sources (4) emit light successively or in any desired order.

13. Method according to Claim 12,
**characterized**
**in that** the sequence of light sources (4) is selected randomly.

14. Method according to Claim 12 or 13,
**characterized**
**in that** the light intensity of the selected light source (4) is increased for a short time.

15. Method according to one of Claims 12 to 14,
**characterized**
**in that** the light sources (4) emit in each case light beams of a first, lower light intensity for providing a first light function overall, and the sequence of light sources (4) whose light emission is increased successively for a short time is selected for providing a second light function.

## Revendications

1. Feu de véhicule (1), comprenant
au moins trois sources de lumière (4) disposées en trois positions (S1, S2, S3) différentes, un élément optique (7) qui possède une pluralité de surfaces de facette (9), les directions des rayons lumineux qui peuvent être émis des sources de lumière (4) en direction des surfaces de facette (9) pouvant être modifiées par les surfaces de facette (9), et une unité de commande (6) destinée à commander les sources de lumière (4),
les positions et/ou les orientations des surfaces de facette (9) par rapport aux positions des sources de lumière (4) étant arrangées de telle sorte que depuis une position d'observation (P) donnée, éloignée du feu de véhicule (1), au moins un rayon lumineux (L1-1) émis par une première source de lumière (4-1) et dont la direction est modifiée par une première surface de facette (9-1) avec une première position de facette (F1) est visible, un rayon lumineux (L2-2) émis par une deuxième source de lumière (4-2) et dont la direction est modifiée par une deuxième surface de facette (9-2) avec une deuxième position de facette (F2) est visible et un rayon lumineux (L3-3) émis par une troisième source de lumière (4-3) et dont la direction est modifiée par une troisième surface de facette (9-3) avec une troisième position de facette (F2) est visible, les première, deuxième et troisième positions de facette (F1, F2, F3) étant respectivement disposées espacées les unes des autres,
**caractérisé en ce que**
les sources de lumière (4) peuvent être commandées de telle sorte qu'à la position d'observation (P), il se produit un effet de scintillation avec lequel une ou plusieurs surfaces de facette produisent, les unes après les autres, une coruscation à différentes positions en raison des rayons lumineux réfléchis, les sources de lumière (4) émettant de la lumière les unes après les autres ou dans une séquence quelconque.

2. Feu de véhicule (1) selon la revendication 1,
**caractérisé en ce que**
les positions et/ou les orientations des surfaces de facette (9) par rapport aux sources de lumière (4) sont arrangées de telle sorte que depuis la position d'observation (P), un rayon lumineux émis par la première source de lumière (4-1) et dont la direction est modifiée par une surface de facette (9) directement voisine de la première surface de facette (9-1) n'est pas visible, un rayon lumineux émis par la deuxième source de lumière (4-2) et dont la direction est modifiée par une surface de facette (9) directement voisine de la deuxième surface de facette (9-2) n'est pas visible et un rayon lumineux émis par la troisième source de lumière (4-3) et dont la direction est modifiée par une surface de facette (9) directement voisine de la troisième surface de facette (9-1) n'est pas visible.

3. Feu de véhicule (1) selon la revendication 1 ou 2,
**caractérisé en ce que** les surfaces de facette (9) sont réfléchissantes.

4. Feu de véhicule (1) selon la revendication 3,
**caractérisé en ce que** l'élément optique (7) est un réflecteur (7) cohérent ayant une surface de réflecteur (8) sur laquelle sont disposées les surfaces de facette (9) réfléchissantes, **en ce qu'**une section transversale du réflecteur (7) comprend une ligne parabolique formée par la surface de réflecteur (8) et **en ce que** la surface de réflecteur (8) est formée par un décalage de la ligne parabolique sur une droite.

5. Feu de véhicule (1) selon la revendication 3,
**caractérisé en ce que** les sources de lumière (4) sont disposées dans la ligne focale de la surface de réflecteur (8).

6. Feu de véhicule (1) selon l'une des revendications précédentes, **caractérisé en ce que** les surfaces de facette (9) sont formées par des surfaces planes.

7. Feu de véhicule (1) selon l'une des revendications précédentes, **caractérisé en ce que** les surfaces de facette (9) sont formées par une combinaison de surfaces rectangulaires et/ou triangulaires.

8. Feu de véhicule (1) selon la revendication 1 ou 2,
**caractérisé en ce que** les surfaces de facette (9) sont des éléments réfringents à travers lesquels passe la lumière émise par les sources de lumière (4).

9. Feu de véhicule (1) selon l'une des revendications précédentes, **caractérisé en ce que** l'unité de commande (6) comprend un générateur de nombres aléatoires (14) avec lequel au moins une source de lumière (4), dont l'émission de lumière peut être modifiée pendant un court intervalle de temps, peut être sélectionnée successivement de manière aléatoire.

10. Feu de véhicule (1) selon l'une des revendications précédentes, **caractérisé en ce que** l'unité de commande (6) comprend une mémoire (13) dans laquelle est enregistré un modèle qui détermine une sélection successive de sources de lumière (4) dont l'émission de lumière peut être modifiée pendant un court intervalle de temps.

11. Feu de véhicule (1) selon l'une des revendications précédentes, **caractérisé en ce qu'**un disque lumineux (3, 10) comportant des éléments optiquement actifs (12) supplémentaires est disposé dans la direction des rayons lumineux émanant de l'élément optique (7).

12. Procédé pour fournir une fonction de lumière au moyen d'un feu de véhicule (1), qui possède au moins trois sources de lumière (4) disposées en trois positions différentes et un élément optique (7) qui possède une pluralité de surfaces de facette (9), les directions des rayons lumineux qui ont été émis des sources de lumière (4) et qui viennent frapper les surfaces de facette (9) étant modifiées par les surfaces de facette (9), une séquence de sources de lumière (4) étant sélectionnée, dont l'émission de lumière est modifiée successivement pendant une courte durée, et l'émission de lumière des sources de lumière (4) est modifiée séquentiellement de telle sorte que depuis une position d'observation (P) donnée, éloignée du feu de véhicule (1), au moins un rayon lumineux (L1-1) émis par une première source de lumière (4-1) et dont la direction a été modifiée par une première surface de facette (9-1) avec une première position de facette (F1) est tout d'abord visible pendant une courte durée, ensuite un rayon lumineux (L2-2) émis par une deuxième source de lumière (4-2) et dont la direction a été modifiée par une deuxième surface de facette (9-2) avec une deuxième position de facette (F2) est visible pendant une courte durée et après quoi un rayon lumineux (L3-3) émis par une troisième source de lumière (4-3) et dont la direction a été modifiée par une troisième surface de facette (9-3) avec une troisième position de facette (F3) est visible pendant une courte durée, les première, deuxième et troisième positions de facette (F1, F2, F3) étant respectivement disposées espacées les unes des autres,
**caractérisé en ce que**
les sources de lumière (4) sont commandées de telle sorte qu'à la position d'observation (P), il se produit un effet de scintillation avec lequel une ou plusieurs surfaces de facette produisent, les unes après les autres, une coruscation à différentes positions en raison des rayons lumineux réfléchis, les sources de lumière (4) émettant de la lumière les unes après les autres ou dans une séquence quelconque.

13. Procédé selon la revendication 12, **caractérisé en ce que** la séquence des sources de lumière (4) est sélectionnée de manière aléatoire.

14. Procédé selon la revendication 12 ou 13, **caractérisé en ce que** l'intensité lumineuse de la source de lumière (4) sélectionnée est augmentée pendant une courte durée.

15. Procédé selon l'une des revendications 12 à 14,
**caractérisé en ce que** les sources de lumière (4), en vue de fournir une première fonction de lumière, émettent au total respectivement des rayons lumineux à une première intensité lumineuse faible et, en vue de fournir une deuxième fonction de lumière, la séquence de sources de lumière (4) dont l'émission lumineuse est augmentée pendant une courte durée est sélectionnée.
